Europäisches Patentamt

**European Patent Office**

**Office européen des brevets**

(19)

(11) Publication number: **0 127 987**
**A1**

(12) # EUROPEAN PATENT APPLICATION

(21) Application number: **84303535.3**

(22) Date of filing: **25.05.84**

(51) Int. Cl.³: **A 01 D 87/12**

(30) Priority: **03.06.83 GB 8315261**

(43) Date of publication of application:
**12.12.84 Bulletin 84/50**

(84) Designated Contracting States:
**AT BE CH DE FR GB IT LI LU NL SE**

(71) Applicant: **A.B.T. Products Limited**
**Alton Road**
**Ross-on-Wye Herefordshire(GB)**

(72) Inventor: **Beach-Thomas, Anthony William**
**Old Gore Upton Bishop**
**Ross-on-Wye Herefordshire(GB)**

(74) Representative: **Carter, Gerald et al,**
**Arthur R. Davies & Co. 27 Imperial Square**
**Cheltenham GL50 1RQ(GB)**

(54) Bale handling implement.

(57) A bale handling implement, for mounting on the end of an angularly adjustable loader arm, comprises a rectangular support frame (13) at the upper and lower ends respectfully of which are mounted two pivot frames (21) and (30). The extremities of the pivot frames carry curved spikes (28, 29, 37, 38) and are interconnected by an hydraulic ram (41) so that the spikes may be extended or retracted from the front of the frame (13) by operation of the ram (41). The spikes (28, 29, 37, 38) are driven into a bale with a wedging action and, once inserted in the bale, they will, due to their curvature, resist any tendency for the bale to slip off the spikes under its own weight.

FIG.3

EP 0 127 987 A1

TITLE MODIFIED
- 1 _see front page

"Improvements in or relating to Bale Handling Implements"

The invention relates to bale handling implements for mounting on a loader or tractor. One common type of such implement comprises a support frame which is adapted to be pivotally mounted on the forward arms of a front end loader or on the rear three-point linkage of a farm tractor. There is rigidly mounted on the frame a spike which projects forwardly from the loader or rearwardly from the tractor. In use, the vehicle is driven towards a bale so that the spike is driven into the end of the bale. By raising the loader arms or linkage the bale may then be lifted from the ground, supported on the spike, and transported or repositioned. One or more further parallel spikes may be provided on the frame to prevent rotation of the bale on the spike.

In the case of a front end loader, it is often required to lower the bale into a feeder where it is accessible to livestock. The bale must normally be removed from the implement by tilting the support frame on the loader arms so that the bale slides from the spike and into the feeder. However, the precise moment at which the bale will slide off the spike will depend on the angle of tilt of the spike and how tightly it engages within the bale. Consequently, the operator cannot control exactly the precise moment at which the bale will slip from the spike and into the feeder. There is therefore a risk that the bale, which may weight half a ton, may fall on the head of an animal trying to use the feeder and may injure or kill it. With conventional bale handlers therefore it is necessary for a second person to be present to keep animals away from the feeder while the bale is placed in position.

A further problem with conventional bale handling implements of the kind referred to arises when it is wished to stack bales. To do this it is necessary to lower the bale into the required position and then to withdraw the loader or tractor so that the spike is withdrawn from the bale. However, the spike may be so tightly embedded in the bale that difficulty is experienced in withdrawing the spike, and the bale may become displaced from its desired position as the spike is withdrawn.

In an endeavour to overcome these problems, it has been proposed to provide on the support frame a pusher plate which slides along the spike and pushes off the bale carried by the spike. This permits greater control of the moment of discharge of the bale when loading into a feeder but it is still necessary for the bale to fall into the feeder, with risk of injury to livestock. When used to stack bales it is necessary to withdraw the spike from the bale by moving the loader or tractor at the same rate as the pusher plate pushes the bale off the spike, so that the bale remains stationary. This is obviously very difficult to control. The present invention sets out to provide an improved bale handling implement which may overcome the above-mentioned problems.

According to the invention there is provided a bale handling implement, for mounting on the end of an angularly adjustable loader arm or three point linkage of a tractor, the implement comprising a support frame, and at least two spaced elongate elements mounted on the support frame so as to project therefrom for engagement with a bale, characterised in that the elongate elements are movably mounted on the frame for movement relatively thereto from a retracted position to an extended position wherein the free ends of the elements project from one side of the frame, the elongate elements being so shaped and located that in the extended position they are not parallel to one another.

Thus, since the elongate elements or spikes are extended and retracted relatively to the frame, they may be driven into a bale and retracted from the bale while both the bale and the frame remain stationary.  Also, since the elements are not parallel with one another in the extended position they will exert a wedging action on the bale and will resist any tendency for the bale to slip off the elements under its own weight even when the frame faces downwardly at an angle.  Consequently, the operator can exercise precise control over when a bale is released from the equipment.  He can therefore nudge any livestock away from a feeder with the bale and place the bale in the feeder before moving the elongate elements to the retracted position to release the bale.  The bale does not therefore need to drop and it is not necessary to move the loader or tractor away from the bale as the bale is released.  If required the operator can drop the bale into the feeder, as is the case with conventional implements, but since he has precise control over the retraction of the elongate elements he may delay dropping the bale until such time as there are no livestock with their heads in the feeder.  Similarly, the equipment according to the invention simplifies the stacking of bales.

Preferably each elongate element is one of a pair of similar parallel elements mounted for synchronous movement relatively to the frame.  Each elongate element may be arcuate so as to be in the form of a curved spike.

Each elongate element may be mounted at one end thereof on a member which is movably mounted on the frame. This member may be pivotally mounted on the frame, the elongate element being mounted on a part of the pivotal member spaced from the pivotal mounting thereof.  Power means, such as an hydraulic piston and cylinder mechanism, may be provided for effecting pivotal movement of the member and thus extension and retraction of the elongate element.

There may be provided two members movably mounted on the frame, said members having their pivotal mountings spaced apart and the members being pivotable in opposite senses with respect to the frame. The piston and cylinder mechanism may be connected between two parts of the pivotal members.

The following is a detailed description of an embodiment of the invention, by way of example, reference being made to the accompanying drawings in which:

Figure 1 is a diagrammatic side elevation of a bale handling implement according to the invention,

Figure 2, is a front elevation of the implement, and

Figure 3 is a perspective view showing the implement mounted on a loader.

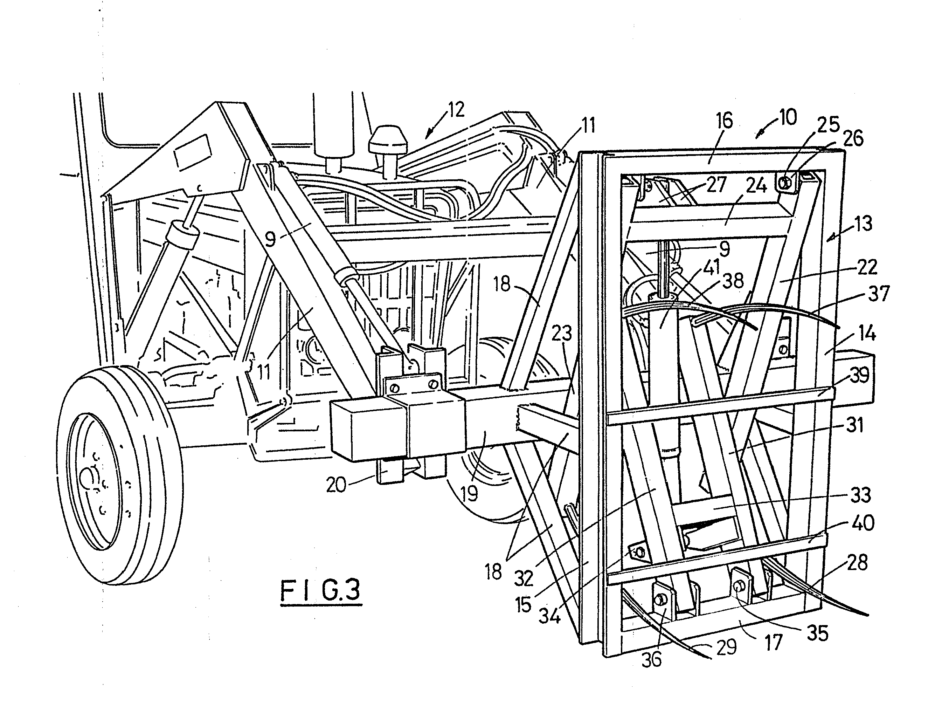

The implement comprises a fixed frame structure 10 for pivotal mounting on the ends of the arms 11 of a loader 12 (Figure 3). The frame structure includes a rectangular frame 13 comprising two main uprights 14 and 15, an upper cross-bar 16 and a lower cross-bar 17. Each upright 14, 15 of the rectangular frame 13 is connected by three struts 18 to a cross beam 19. The ends of the cross beam 19 are clamped to brackets 20 pivotally mounted on the ends of the loader arms 11. In known manner, the brackets are so connected to hydraulic rams 9 on the loader arms 11 that the brackets, and hence the frame 13, may remain vertical as the arms 11 are raised and lowered, or may be tilted by operation of the rams 9.

A first U-frame 21 is located between the uprights 14 and 15 and comprises side arms 22 and 23 connected at their upper end by a cross arm 24. The ends of the side arms 22 and 23 project upwardly beyond the cross arm 24 and are pivotally mounted on bolts 25 which extend between brackets 26, mounted on the cross-bar 16, and the side arms 22 and 223 respectively. Spaced, parallel crank arms 27 are welded to the cross arm 24 and extend rearwardly of the frame 13.

Two upwardly curving spikes 28, 29 are mounted at one end to the lower extremities of the side arms 22 and 23 respectively.

A second U-frame 30 is located between the side arms 22 and 23 of the frame 21 and comprises side arms 31 and 32 interconnected adjacent their lower ends by a cross arm 33. Spaced, parallel rearwardly projecting crank arms 34 are welded to the cross arm 33. The lower extremities of the side arms of the frame 30 are pivotally connected by bolts 35 to spaced brackets 36 on the lower cross-bar 17 of the frame 13. Downwardly curved spikes 37, 38 are mounted on the upper extremities of the side arms 31, 32.

Fixed crossbars 39 and 40 extend across the forward side of the frame adjacent the pairs of spikes respectively to prevent the frames 21 and 30 swinging forwardly out of the frame.

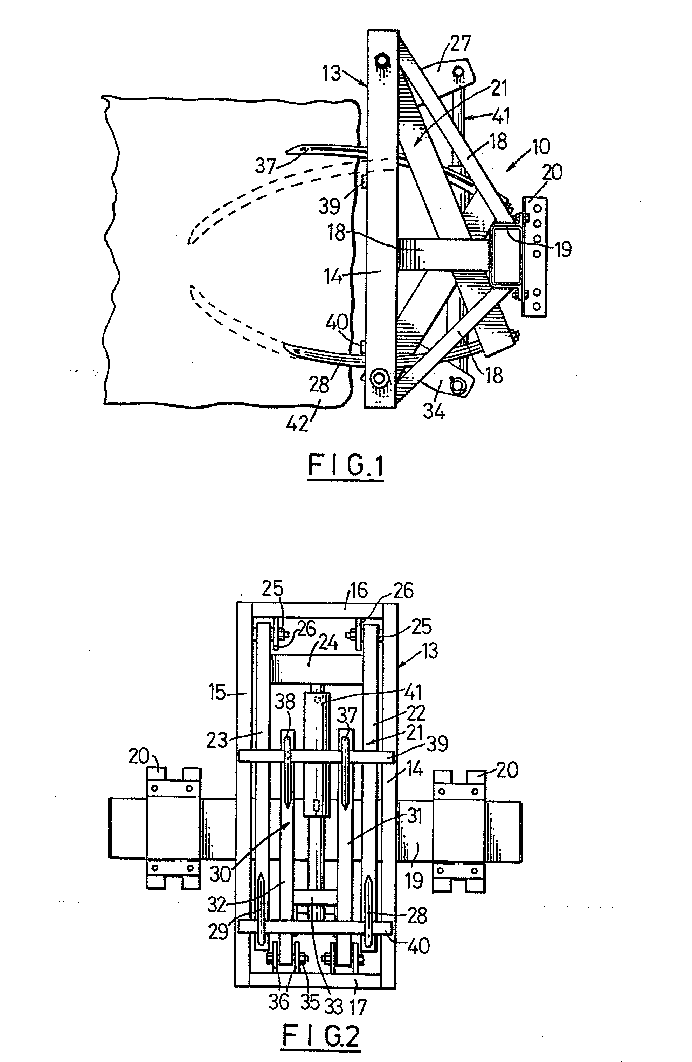

Referring to Figure 1, the rearwardly projecting crank arms 27 and 34 of the two U-frames are interconnected by a vertical hydraulic ram 41.

When the hydraulic ram 41 is fully extended the U-frames 21 and 30 are both swung rearwardly to the position shown in solid lines in Figure 1 where the spikes 28, 29, 37 and 38 are retracted and project only a short distance from the front of the frame 13.

The implement is, in this position, moved to abut the end of a cylindrical bale, indicated at 42 in Figure 1, and the ram 41 is then retracted so as to swing the upper frame 21 clockwise and the lower frame 30 anticlockwise and drive the curved spikes 28, 29, 37 and 38 into the end of the bale to the position shown in dotted lines in Figure 1. In this position the bale is securely held on the implement and cannot fall off the spikes when lifted from the ground, due to the curvature of the spikes which act to grip the bale. The bale may then be manœvred into the desired location, in a stack or in or over a feeder. The ram 41 is then extended, which swings the frames 21 and 30 back to the retracted position shown in solid lines in Figure 1, thus withdrawing the spikes 28, 29, 37 and 38 from the bale and releasing it. It will be appreciated that no movement of the frame 10 or of the vehicle carrying it is necessary during disengagement of the spikes from the bale. The bale may thus be positioned very precisely.

The equipment is also particularly suitable for use in the case where bales require to be bagged since a plastic bag may be slipped over the bale while it is supported on the implement and yet the holding spikes may be retracted from the end of the bale without stretching, tearing or in any way interfering with the bag encircling the bale.

Although the spikes 28, 29, 37 and 38 are shown as curved so that they may be easily driven into the end of the bale with the swinging movement of the arms on which they are mounted, it will be appreciated that this is not essential and any suitable shape of spike may be used, provided that in the extended position the spikes are not parallel since this would allow the bale to slip from the spikes as in conventional arrangements. The spikes will slide most easily into the end of the bale if the curvature of each spike is centred about the axis of pivoting of the frame on which it is mounted. However, it is found in practice that it is preferable for the arc of curvature of the spikes not to be struck about the axis of pivoting but to differ therefrom so that the spikes enter the bale with a wedging action so as to hold the bale more securely on the spikes.

## CLAIMS

1. A bale handling implement, for mounting on the end of an angularly adjustable loader arm or three point linkage of a tractor, the implement comprising a support frame and at least two spaced elongate elements mounted on the support frame so as to project therefrom for engagement with a bale, characterised in that the elongate elements (28, 29, 37, 38) are movably mounted on the frame (13) for movement relatively thereto from a retracted position to an extended position wherein the free ends of the elements project from one side of the frame, the elongate elements (28, 29, 37, 38) being so shaped and located that in the extended position they are not parallel to one another.

2. An implement according to claim 1, characterised in that the elongate elements (28, 29, 37, 38) also project from said one side of the support frame (13) when in the retracted position, but to a lesser extent than in the extended position.

3. An implement according to claim 1 or claim 2, characterised in that each elongate element (28, 29, 37, 38) is one of a pair of similar parallel elements mounted for synchronous movement relatively to the frame (13).

4. An implement according to any of claims 1 to 3, characterised in that each elongate element is arcuate so as to be in the form of a curved spike (28, 29, 37, 38).

5. An implement according to any of claims 1 to 5, characterised in that each elongate element is mounted at one end thereof on a member (21, 30) which is movably mounted on the frame (13).

6. An implement according to claim 5, characterised in that said movably mounted member (21, 30) is pivotally mounted on the frame, the elongate element being mounted on a part of the pivotal member (21, 30) spaced from the pivotal mounting (25, 36) thereof.

7. An implement according to claim 6, characterised in that power means (41) are provided for effecting pivotal movement of the member (21, 30) and thus extension and retraction of the elongate elements.

8. An implement according to claim 7, characterised in that said power means comprise an hydraulic piston and cylinder mechanism (41).

9. Am implement according to any of claims 6 to 8 characterised in that there are provided two members (21, 30) movably mounted on the frame (13), said members having their pivotal mountings spaced apart and the members being pivotable in opposite senses with respect to the frame.

10. An implement according to claim 8 and claim 9, characterised in that the piston and cylinder mechanism (41) is connected between two parts (27, 34) of the pivotal members.

0127987

FIG.1

FIG.2

F I G.3

European Patent
Office

**EUROPEAN SEARCH REPORT**

| | **DOCUMENTS CONSIDERED TO BE RELEVANT** | | EP 84303535.3 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| Y | <u>GB - A - 1 216 960</u> (J.A. FREUDEN-DAHL) <br> * Fig. 1,2 * <br> --- | 1-7 | A 01 D 87/12 |
| Y | <u>EP - A1 - 0 055 186</u> (S.A. AUDUREAU) <br> * Fig. 1-4 * <br> -- | 1-7 | |
| A | <u>US - A - 3 876 093</u> (CARRIERE) <br> * Fig. 1-5 * <br> -- | 1-10 | |
| A | <u>GB - A - 2 048 820</u> (GEORGE COGHLAN) <br> * Fig. 7 * <br> -- | 1-10 | |
| | | | **TECHNICAL FIELDS SEARCHED (Int. Cl. ³)** |
| A | <u>DE - A - 2 112 515</u> (PATTERSON'S VENTURE LTD.) <br> -- | | A 01 C 3/00 |
| A | <u>US - A - 4 260 323</u> (MUNTJANOFF) <br> ---- | | A 01 D 87/00 <br> B 66 C 1/00 <br> B 66 F 9/00 |

The present search report has been drawn up for all claims

| Place of search | Date of completion of the search | Examiner |
|---|---|---|
| VIENNA | 30-07-1984 | SCHWAB |